(19) Europäisches Patentamt
European Patent Office
Office européen des brevets

(11) **EP 4 497 775 A1**

(12) **EUROPEAN PATENT APPLICATION**
published in accordance with Art. 153(4) EPC

(43) Date of publication:
**29.01.2025 Bulletin 2025/05**

(21) Application number: **23904070.2**

(22) Date of filing: **15.12.2023**

(51) International Patent Classification (IPC):
***C08J 3/24*** *(2006.01)* ***C08J 3/12*** *(2006.01)*
***C08F 20/06*** *(2006.01)* ***C08J 3/075*** *(2006.01)*

(52) Cooperative Patent Classification (CPC):
**C08F 20/06; C08J 3/075; C08J 3/12; C08J 3/24**

(86) International application number:
**PCT/KR2023/020792**

(87) International publication number:
**WO 2024/128871 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 KR 20220176831**
**16.12.2022 KR 20220177310**
**13.12.2023 KR 20230181009**

(71) Applicant: **LG Chem, Ltd.**
**Yeongdeungpo-gu**
**Seoul 07336 (KR)**

(72) Inventors:
- **LEE, Junwye**
  **Daejeon 34122 (KR)**
- **PARK, Sung Soo**
  **Daejeon 34122 (KR)**
- **KIM, Tae Yun**
  **Daejeon 34122 (KR)**
- **WOO, Heechang**
  **Daejeon 34122 (KR)**
- **BAEK, Seokhyeon**
  **Daejeon 34122 (KR)**
- **HAN, Sangwon**
  **Daejeon 34122 (KR)**
- **KIM, Gicheul**
  **Daejeon 34122 (KR)**
- **MIN, Yoon Jae**
  **Daejeon 34122 (KR)**
- **JU, Jin Hyuck**
  **Daejeon 34122 (KR)**
- **AHN, Taebin**
  **Daejeon 34122 (KR)**
- **LEE, Seul Ah**
  **Daejeon 34122 (KR)**
- **PARK, Dong Hoon**
  **Daejeon 34122 (KR)**
- **SHIN, Kwangin**
  **Daejeon 34122 (KR)**
- **PARK, Se Yeol**
  **Daejeon 34122 (KR)**
- **CHUNG, Ui Seok**
  **Daejeon 34122 (KR)**
- **JEE, Min Goo**
  **Daejeon 34122 (KR)**

(74) Representative: **Plasseraud IP**
**104 Rue de Richelieu**
**CS92104**
**75080 Paris Cedex 02 (FR)**

# (54) PREPARATION METHOD FOR SUPER ABSORBENT POLYMER

(57) The present disclosure relates to a preparation method of a super absorbent polymer and a super absorbent polymer. More specifically, it relates to a preparation method of a super absorbent polymer exhibiting excellent absorption properties with significantly reduced generation of fine particles.

【FIG. 1】

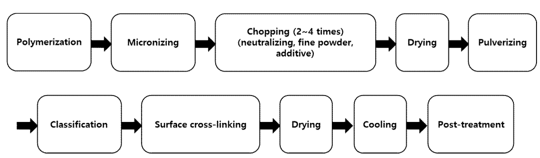


EP 4 497 775 A1

## Description

[TECHNICAL FIELD]

Cross-reference to Related Application(s)

This application claims the benefits of Korean Patent Applications No. 10-2022-0176831 filed on December 16, 2022, No. 10-2022-0177310 filed on December 16, 2022 and No. 10-2023-0181009 filed on December 13, 2023 with the Korean Intellectual Property Office, the disclosure of which is incorporated herein by reference in its entirety.

The present disclosure relates to a preparation method of a super absorbent polymer. More specifically, it relates to a preparation method of a super absorbent polymer exhibiting excellent absorption properties with significantly reduced generation of fine particles.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

In the case of the above-described hygienic materials in which the pulp content is reduced or pulp is not used, the super absorbent polymer is included in a relatively high ratio, so that the super absorbent polymer particles are inevitably included in multiple layers in the hygienic materials. In order for the entire super absorbent polymer particles included in multiple layers to more efficiently absorb a large amount of liquid such as urine, the super absorbent polymer basically needs to exhibit excellent absorption performance as well as a high absorption rate.

Meanwhile, such a super absorbent polymer is generally prepared by performing the step of polymerizing monomers to prepare a hydrogel polymer containing a large amount of moisture; and the step of drying the hydrogel polymer, and then pulverizing it into polymer particles having a desired particle diameter. However, when the hydrogel polymer is dried and then pulverized as described above, a large amount of fine powder is generated, which has a problem of lowering the physical properties, especially absorption properties, of the super absorbent polymer to be finally prepared.

Accordingly, in order to reuse the fine powder, it is common to mix the fine powder with water for agglomeration to produce a fine reassembly, and then add the fine reassembly to the process such as drying/pulverization/classification. However, the water used herein may cause problems such as increased energy usage during drying and increased load on the device, which may reduce productivity of super absorbent polymer production.

Meanwhile, the most common method to increase the absorption rate is to expand the surface area of the super absorbent polymer by forming a porous structure in the super absorbent polymer. In order to increase the surface area of the super absorbent polymer, a method of forming a porous structure in the base resin powder by including a foaming agent in the monomer composition and performing cross-linking polymerization is generally selected.

However, the use of a foaming agent has the disadvantage of lowering physical properties of the super absorbent polymer, such as surface tension, permeability, or bulk density, and increasing the generation of fine particles. Accordingly, the development of technology that can improve the absorption rate of the super absorbent polymer without the use of a foaming agent is continuously requested.

Accordingly, there is a continuous demand for developing a technique of preparing a super absorbent polymer without generating fine particles in order to fundamentally solve these problems.

[DETAILED DESCRIPTION OF THE INVENTION]

[Technical Problem]

Accordingly, there is provided a preparation method of a super absorbent polymer exhibiting excellent absorption properties while significantly improving the absorption rate and significantly reducing the generation of fine particles during the process by forming micropores in the polymer through a micronization process to increase the surface area.

[Technical Solution]

In order to solve the above problems, there is provided a preparation method of a super absorbent polymer including the steps of:

performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
micronizing the polymer at a rotation speed of 500 rpm to 4,000 rpm (step 2);
neutralizing at least some of the acidic groups of the polymer (step 3);
drying the micronized and neutralized polymer to obtain dried super absorbent polymer particles (step 4); and
preparing super absorbent polymer particles by pulverizing the dried super absorbent polymer particles (step 5).

[ADVANTAGEOUS EFFECTS]

According to the preparation method of a super absorbent polymer of the present disclosure, it is possible to provide a super absorbent polymer exhibiting excellent absorption properties while significantly improving the absorption rate and significantly reducing the generation of fine particles during the process by forming micropores in the polymer through a micronization process to increase the surface area.

[BRIEF DESCRIPTION OF THE DRAWINGS]

FIG. 1 is a flowchart of a preparation method of a super absorbent polymer according to one embodiment of the present disclosure.
FIG. 2 is an SEM image of a polymer prepared by a preparation method of a super absorbent polymer according to one embodiment of the present disclosure.

[DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.
As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.
As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.
Hereinafter, the preparation method for a super absorbent polymer and the super absorbent polymer of the present disclosure will be described in more detail.
The terminology used herein is only intended to refer to specific embodiments and is not intended to limit the present invention. Further, as used herein, the singular forms also include the plural forms unless the phrases clearly indicate the opposite.
According to one embodiment of the present disclosure, there is provided a preparation method of a super absorbent polymer including the steps of:

performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
micronizing the polymer at a rotation speed of 500 rpm to 4,000 rpm (step 2);

neutralizing at least some of the acidic groups of the polymer (step 3);
drying the micronized and neutralized polymer to obtain dried super absorbent polymer particles (step 4); and
preparing super absorbent polymer particles by pulverizing the dried super absorbent polymer particles (step 5).

The terminology "polymer" in the present disclosure is in a state in which water-soluble ethylene-based unsaturated monomers are polymerized, and may include all moisture content ranges, or all particle diameter ranges.
In addition, the terminology "super absorbent polymer" is used to encompass all of a cross-linked polymer or a base resin in the form of powder consisting of super absorbent polymer particles in which the cross-linked polymer is pulverized, and the cross-linked polymer or the base resin further processed, for example, drying, pulverization, classification, surface cross-linking, etc., to be in a state suitable for commercialization, depending on the context.
In addition, the terminology "fine powder" or "fine particle" refers to particles having a particle diameter of less than 150 μm among the super absorbent polymer particles. The particle diameter of these polymer particles may be measured according to the EDANA (European Disposables and Nonwovens Association) WSP 220.3.
In addition, the terminology "chopping" refers to cutting the hydrogel polymer into small pieces of millimeters in order to increase drying efficiency, and is used separately from pulverization to a level of micrometers or normal particles.
In addition, the terminology "micronizing (micronization)" refers to pulverizing the hydrogel polymer to a particle diameter of several tens to hundreds of micrometers, and is used separately from "chopping".
The hydrogel polymer obtained by polymerization of acrylic acid-based monomers undergoes processes such as drying, pulverization, classification, and surface cross-linking, and is sold as a super absorbent polymer in the form of powder. Recently, attempts have been made continuously to provide a super absorbent polymer exhibiting a more improved absorption rate.
The most common method to increase the absorption rate is to increase the surface area of the super absorbent polymer by forming a porous structure in the super absorbent polymer. In order to increase the surface area of the super absorbent polymer, a method of forming a porous structure in the base resin powder by including a foaming agent in the monomer composition, and then performing cross-linking polymerization is generally selected.
However, the use of a foaming agent has the disadvantage of lowering physical properties of the super absorbent polymer, such as surface tension, permeability, or bulk density, and increasing the generation of fine particles. Accordingly, the development of technology that can improve the absorption rate of the super absorbent polymer without the use of a foaming agent is continuously requested.
Meanwhile, super absorbent polymers are conventionally prepared by performing cross-linking polymerization on a water-soluble ethylene-based unsaturated monomer having at least partially neutralized acidic groups in the presence of an internal cross-linking agent and a polymerization initiator to form a hydrogel polymer, and then drying the formed hydrogel polymer, followed by pulverization to a desired particle size. At this time, a chopping process of cutting the hydrogel polymer into particles of several millimeters is usually performed before the drying process to facilitate drying of the hydrogel polymer and increase the efficiency of the pulverization process. However, due to the stickiness of the hydrogel polymer in this chopping process, the hydrogel polymer cannot be pulverized to micro-sized particles and becomes an aggregated gel. When the hydrogel polymer in the form of an aggregated gel is dried, a plate-shaped dried product is formed. In order to pulverize it to micro-sized particles, a multi-stage pulverization process is required, so there has been a problem in that many fine particles are generated in this process.
Specifically, the super absorbent polymer has conventionally been prepared by including the following steps.

(Neutralization) neutralizing at least some of acidic groups of the water-soluble ethylene-based unsaturated monomer;
(Polymerization) forming a hydrogel polymer by cross-linking polymerization of a water-soluble ethylene-based unsaturated monomer having at least partially neutralized acidic groups in the presence of an internal cross-linking agent and a polymerization initiator;
(Chopping) chopping the hydrogel polymer;
(Drying) drying the chopped hydrogel polymer; and
(Pulverization/classification) pulverizing the dried polymer and then classifying it into normal particles and fine particles.

As described above, the chopped hydrogel polymer has an aggregated gel shape with a size of about 1 cm to 10 cm. Such a chopped hydrogel polymer is laminated on a belt whose bottom is made of a perforated plate, and dried by hot air supplied from the bottom or top. Since the polymer dried by the above drying method has a plate shape rather than a particle shape, the classification step after pulverization has been performed by coarse pulverization, then classification, followed by fine pulverization again, then classification so that the particles to be prepared become normal particles, that is, particles having a particle diameter of 150 μm to 850 μm. Since the amount of the fine particles separated in the final classification step is about 20 wt% to about 30 wt% based on the total weight of the final super absorbent polymer, the

separated fine particles were mixed with an appropriate amount of water, reassembled, and then introduced in the chopping step or before drying for reuse.

However, problems such as causing an increase in equipment load and/or energy consumption have occurred when a fine reassembly mixed with water is re-injected into the pulverization or drying process for reuse of the fine particles, and the remaining fine particles that have not been classified caused deterioration of physical properties of the super absorbent polymer.

Accordingly, the present inventors have found that the generation of fine particles in the conventional preparation method is greatly affected by a pulverization process, and the generation of fine particles in the preparation process can be significantly reduced by controlling the pulverizing conditions of the polymer.

Meanwhile, the most common method to increase the absorption rate is to increase the surface area of the super absorbent polymer by forming a porous structure in the super absorbent polymer. In order to increase the surface area of the super absorbent polymer, a method of forming a porous structure in the base resin powder by including a foaming agent in the monomer composition and then performing cross-linking polymerization is generally selected.

However, the use of a foaming agent has the disadvantage of lowering physical properties of the super absorbent polymer, such as surface tension, permeability, or bulk density, and increasing the generation of fine particles due to the pores formed by the foaming agent, which sharpen the shape of the particle surface. Accordingly, the development of technology that can improve the absorption rate of the super absorbent polymer without the use of a foaming agent is continuously requested.

As a result of repeated research to solve this problem, it has been confirmed that when polymerization is first performed in a state where the acidic groups are not neutralized to form a polymer, the hydrogel polymer is micronized by applying high intensity mechanical shear force and then the acidic groups of the polymer are neutralized; when the acidic groups of the polymer are neutralized to form a hydrogel polymer, and then the hydrogel polymer is micronized; or when the acidic groups present in the polymer are neutralized at the same time as micronization, agglomerated hydrogel particles with micropores could be formed. As the hydrogel polymer prepared through this process is manufactured in the form of particles with stable micropores of 100 μm or less, and the pulverization and drying processes proceed under milder conditions, the generation of fine particles during the processes can be significantly reduced. In addition, it has been confirmed that the micronization process using the high-intensity mechanical shear force can significantly improve the absorption rate by forming micropores in the hydrogel polymer without using a separate foaming agent in the polymerization step.

Meanwhile, the micronization process of the hydrogel polymer may preferably be performed in the presence of a surfactant. When using a surfactant in the micronization step, agglomeration of particles can be effectively controlled, and thus productivity can be further improved by lowering the load on the machine.

In addition, when polymerization is first performed in an unneutralized state to form a polymer, and then acidic groups present in the polymer are neutralized, a longer chain polymer can be formed, so that it is possible to reduce the content of extractable components present in a non-crosslinked state due to that cross-linking is incomplete.

The extractable components have a property of being easily eluted when the super absorbent polymer comes into contact with a liquid. When the content of the extractable components is high, most of the eluted extractable components remain on the surface of the super absorbent polymer and make the super absorbent polymer sticky, thereby reducing permeability. Therefore, it is important to keep the content of extractable components low in terms of permeability.

According to one embodiment of the present disclosure, as the polymerization is performed in an unneutralized state, the content of extractable components is lowered, and thus permeability of the super absorbent polymer can be improved.

Further, the super absorbent polymer prepared according to one embodiment of the present disclosure may have a uniform particle size distribution, and thus it is possible to provide a super absorbent polymer excellent in absorption properties such as centrifuge retention capacity and absorbency under pressure, rewet characteristics, and absorption rate.

Hereinafter, the preparation method of a super absorbent polymer of one embodiment will be described in more detail for each step.

<u>Preparation of super absorbent polymer</u>

<u>Step 1: Polymerization step</u>

First, polymerization is performed on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized.

The above step may include a step of preparing a monomer composition by mixing the water-soluble ethylene-based unsaturated monomer having acidic groups, an internal cross-linking agent, and a polymerization initiator, and a step of polymerizing the monomer composition to form a polymer.

The water-soluble ethylene-based unsaturated monomer may be any monomer commonly used in the preparation of a super absorbent polymer. Specifically, the water-soluble ethylene-based unsaturated monomer may be a compound represented by the following Chemical Formula 1:

[Chemical Formula 1] R-COOM'

in Chemical Formula 1,

R is a C2 to C5 alkyl group having an unsaturated bond, and
M' is a hydrogen atom, a monovalent or divalent metal, an ammonium group, or an organic amine salt.

Preferably, the monomer may be at least one selected from the group consisting of (meth)acrylic acid, and a monovalent (alkali)metal salt, a divalent metal salt, an ammonium salt and an organic amine salt of the acid.

When (meth)acrylic acid and/or a salt thereof is used as a water-soluble ethylene-based unsaturated monomer, it is advantageous to obtain a super absorbent polymer having improved absorption performance. In addition, maleic anhydride, fumalic acid, crotonic acid, itaconic acid, 2-acryloylethane sulfonic acid, 2-methacryloylethane sulfonic acid, 2-(meth)acryloylpropanesulfonic acid, 2-(meth)acrylamide-2-methyl propanesulfonic acid, (meth)acrylamide, N-substituted (meth)acrylate, 2-hydroxyethyl(meth)acrylate, 2-hydroxypropyl(meth)acrylate, methoxypolyethyleneglycol(meth) acrylate, polyethyleneglycol(meth)acrylate, (N,N)-dimethylaminoethyl(meth)acrylate, (N,N)-dimethylaminopropyl(meth) acrylamide, and the like may be used as the monomer.

Herein, the water-soluble ethylene-based unsaturated monomer has acidic groups. As described above, a polymer was conventionally formed by cross-linking polymerization of a monomer in which at least some of the acidic groups are neutralized by a neutralizing agent. Specifically, in the step of mixing the water-soluble ethylene-based unsaturated monomer having an acidic group, an internal cross-linking agent, a polymerization initiator, and a neutralizing agent, at least some of the acidic groups of the water-soluble ethylene-based unsaturated monomer were neutralized.

However, according to one embodiment of the present disclosure, polymerization is first performed in a state where acidic groups of the water-soluble ethylene-based unsaturated monomer are not neutralized to form a polymer.

The water-soluble ethylene-based unsaturated monomers (e.g., acrylic acid) in a state where acidic groups are not neutralized are in a liquid state at room temperature, and have high miscibility with a solvent (water), and thus exist in the monomer composition in the form of a mixed solution. However, the water-soluble ethylene-based unsaturated monomers in which the acidic groups are neutralized are in a solid state at room temperature, have different solubility depending on the temperature of the solvent (water), and has lower solubility at a lower temperature.

The water-soluble ethylene-based unsaturated monomers in which acidic groups are not neutralized have higher solubility or miscibility with a solvent (water) than monomers in which acidic groups are neutralized, so that they do not precipitate even at low temperatures, and thus are advantageous for long-term polymerization at low temperatures. Accordingly, it is possible to stably form a polymer having a higher molecular weight and a uniform molecular weight distribution by performing polymerization for a long time using the water-soluble ethylene-based unsaturated monomer in which acidic groups are not neutralized.

In addition, it is possible to form a long chain polymer, thereby achieving an effect of reducing the content of extractable components present in a non-crosslinked state due to incomplete polymerization or cross-linking.

In addition, when polymerization is first performed in a state where the acidic groups of the monomer are not neutralized to form a polymer, and then micronization is performed in the presence of a surfactant after neutralization; neutralization is performed after micronization in the presence of a surfactant; or the acidic groups present in the polymer are neutralized at the same time as micronization, a large amount of surfactant may be present on the surface of the polymer to sufficiently play a role of lowering the adhesiveness of the polymer.

The concentration of the water-soluble ethylene-based unsaturated monomer in the monomer composition may be about 20 to 60 wt%, or about 20 to 40 wt% in consideration of polymerization time and reaction conditions.

The term 'internal cross-linking agent' as used herein is a term used to distinguish it from a surface cross-linking agent commonly used for cross-linking the surface of super absorbent polymer particles, and serves to form a polymer having a cross-linked structure by introducing cross-links between the unsaturated bonds of the water-soluble ethylene-based unsaturated monomers described above.

The cross-linking in the above step proceeds both on the surface and on the inside, but when the surface cross-linking process of the super absorbent polymer particles proceeds, the surface of the particles of the finally prepared super absorbent polymer may have a structure newly cross-linked by a surface cross-linking agent, and the inside of the particles may maintain the structure cross-linked by the internal cross-linking agent.

According to one embodiment of the present disclosure, the internal cross-linking agent may include any one or

more of a multifunctional acrylate-based compound, a multifunctional allyl-based compound, or a multifunctional vinyl-based compound.

Non-limiting examples of the multifunctional acrylate-based compound may include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, glycerin tri(meth)acrylate, and the like, and these can be used alone or in combination of two or more types.

Non-limiting examples of the multifunctional allyl-based compound may include ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerol diallyl ether, glycerin triallyl ether, and the like, and these can be used alone or in combination of two or more types.

Non-limiting examples of the multifunctional vinyl-based compound may include ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, glycerin trivinyl ether, and the like, and these can be used alone or in combination of two or more types. Preferably, pentaerythritol trivinyl ether can be used.

In the above-mentioned multifunctional allyl-based compound or multifunctional vinyl-based compound, two or more unsaturated groups contained in the molecule are bonded to the unsaturated bond of water-soluble ethylene-based unsaturated monomers or the unsaturated bond of another internal cross-linking agent, thereby forming a cross-linked structure during the polymerization process. In addition, unlike acrylate-based compounds containing an ester bond (-(C=O)O-) in the molecule, cross-linking can be maintained more stably even during the neutralization process after the polymerization reaction described above.

Accordingly, the gel strength of the final super absorbent polymer can be increased, process stability can be increased during the discharge process after polymerization, and the amount of extractable components can be minimized.

The cross-linking polymerization of the water-soluble ethylene-based unsaturated monomer in the presence of an internal cross-linking agent may be performed in the presence of a polymerization initiator, if necessary, a thickener, a plasticizer, a storage stabilizer, an antioxidant, etc.

The internal cross-linking agent may be used in an amount of 0.01 to 5 parts by weight based on 100 parts by weight of the water-soluble ethylene-based unsaturated monomer in the monomer composition. For example, the internal cross-linking agent may be used in an amount of 0.01 parts by weight or more, 0.05 parts by weight or more, or 0.1 parts by weight or more, and 5 parts by weight or less, 3 parts by weight or less, 2 parts by weight or less, 1 part by weight or less, or 0.7 parts by weight or less. When the content of the internal cross-linking agent is too low, cross-linking does not occur sufficiently, making it difficult to realize a strength above an appropriate level. When the content of the internal cross-linking agent is too high, the internal cross-linking density increases, making it difficult to realize a desired centrifuge retention capacity.

The polymer formed using such an internal cross-linking agent has a three-dimensional network structure in which main chains formed by polymerizing the water-soluble ethylene-based unsaturated monomers are cross-linked by the internal cross-linking agent. When the polymer has the three-dimensional network structure in this way, the centrifuge retention capacity and absorbency under pressure, which are various physical properties of the super absorbent polymer, can be significantly improved compared to the polymer with a two-dimensional linear structure that is not additionally cross-linked by an internal cross-linking agent.

According to one embodiment of the present disclosure, the step of forming a polymer by performing polymerization on the monomer composition may be performed in a batch type reactor for 1 hour or more.

In the conventional method for preparing a super absorbent polymer composition, the polymerization method is largely divided into the thermal polymerization and the photopolymerization according to an energy source of the polymerization. In the case of thermal polymerization, it is generally carried out in a reactor equipped with an agitation spindle, such as a kneader. In the case of photopolymerization, it may be carried out in a container with a flat bottom.

Meanwhile, when the polymerization is performed in a continuous manner, for example, the polymerization is

performed in the reactor equipped with a conveyor belt and an agitation spindle, a new monomer composition is supplied to the reactor while the polymerization product is moving. Therefore, polymers having different degrees of polymerization are mixed, and accordingly, it is difficult to achieve uniform polymerization throughout the monomer composition, and overall physical properties may be deteriorated.

However, according to one embodiment of the present disclosure, as the polymerization proceeds in a fixed-bed type in a batch reactor, there is little risk of mixing polymers having different degrees of polymerization, and accordingly, polymers having uniform quality can be obtained.

In addition, the polymerization step is performed in a batch-type reactor having a predetermined volume, and the polymerization reaction is performed for a longer period of time, for example, 1 hour or more, 3 hours or more, or 6 hours or more than polymerization in a continuous manner in a reactor equipped with a conveyor belt. Preferably, it may be performed for 1 hour to 24 hours, 1 hour to 18 hours, 1 hour to 12 hours, or 1 hour to 8 hours. Despite the long polymerization time as described above, monomers are not easily precipitated because the polymerization is performed on unneutralized water-soluble ethylene-based unsaturated monomers. Therefore, it is advantageous to perform the polymerization for a long time.

Meanwhile, as the polymerization in the batch-type reactor of the present disclosure uses a thermal polymerization method, a thermal polymerization initiator is used as the polymerization initiator.

In addition, one or more initiators selected from the group consisting of a persulfate-based initiator, an azo-based initiator, hydrogen peroxide, and ascorbic acid may be used as the thermal polymerization initiator. Specifically, sodium persulfate ($Na_2S_2O_8$), potassium persulfate ($K_2S_2O_8$), ammonium persulfate ($(NH_4)_2S_2O_8$), and the like may be used as examples of the persulfate-based initiators; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiators. More various thermal polymerization initiators are well disclosed in 'Principle of Polymerization (Wiley, 1981)' written by Odian, p 203, and the present disclosure is not limited thereto.

The polymerization initiator may be used in an amount of 2 parts by weight or less based on 100 parts by weight of the water-soluble ethylene-based unsaturated monomer. When the concentration of the polymerization initiator is excessively low, the polymerization rate may become slow, and a large amount of residual monomers may be extracted from the final product. Conversely, when the concentration of the polymerization initiator is higher than the above range, polymer chains forming a network are shortened, so that the extractable content increases and absorbency under pressure decreases, thereby lowering physical properties of the polymer.

Meanwhile, in one embodiment of the present disclosure, polymerization may be initiated by adding a reducing agent capable of forming a redox couple with the initiator.

Specifically, when the initiator and the reducing agent are added to the polymer solution, they react with each other to form radicals.

Since the formed radicals react with the monomer, and the oxidation-reduction reaction between the initiator and the reducing agent is very reactive, polymerization is initiated even when only a small amount of initiator and reducing agent are added, so there is no need to increase the process temperature. Therefore, low-temperature polymerization is possible, and changes in physical properties of the polymer solution can be minimized.

The polymerization reaction using the oxidation-reduction reaction can occur smoothly even at a temperature around or below room temperature (25 °C). For example, the polymerization reaction may be performed at a temperature of 5 °C or higher and 25 °C or lower, or 5 °C or higher and 20 °C or lower.

In one embodiment of the present disclosure, when a persulfate-based initiator is used as the initiator, the reducing agent may be at least one selected from the group consisting of sodium metabisulfite ($Na_2S_2O_5$), tetramethyl ethylenediamine (TMEDA), a mixture of iron sulfate (II) and EDTA ($FeSO_4$/EDTA), sodium formaldehyde sulfoxylate, and disodium 2-hydroxy-2-sulfinoacteate.

In one example, potassium persulfate is used as the initiator and disodium 2-hydroxy-2-sulfinoacetate is used as the reducing agent; ammonium persulfate is used as the initiator and tetramethylethylenediamine is used as the reducing agent; or sodium persulfate is used as the initiator and sodium formaldehyde sulfoxylate is used as the reducing agent.

In another embodiment of the present disclosure, when a hydrogen peroxide-based oxidizing agent is used as the initiator, the reducing agent may be at least one selected from the group consisting of ascorbic acid, sucrose, sodium sulfite ($Na_2SO_3$), sodium metabisulfite ($Na_2S_2O_5$), tetramethyl ethylenediamine (TMEDA), a mixture of iron sulfate (II) and EDTA ($FeSO_4$/EDTA), sodium formaldehyde sulfoxylate, disodium 2-hydroxy-2-sulfinoacteate and disodium 2-hydroxy-2-sulfinoacteate.

The monomer composition may further include additives such as a thickener, a plasticizer, a storage stabilizer, and an antioxidant, if necessary.

Further, the monomer composition including the monomer may be, for example, in the form of a solution dissolved in a solvent such as water, and the solid content in the monomer composition in the form of a solution, that is, the concentration of the monomer, internal cross-linking agent, and polymerization initiator can be appropriately adjusted in

consideration of the polymerization time and reaction conditions. For example, the solid content in the monomer composition may be 10 to 80 wt%, 15 to 60 wt%, or 30 to 50 wt%.

At this time, any solvent which can dissolve the above components may be used without limitation. For example, the solvent may be at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

As the polymer obtained in this way is polymerized using unneutralized ethylene-based unsaturated monomers, a polymer having a high molecular weight and a uniform molecular weight distribution can be formed, and the content of extractable components can be reduced.

In addition, the polymer may have a moisture content of 30 to 80 wt%. For example, the moisture content of the polymer may be 30 wt% or more, 45 wt% or more, or 50 wt% or more, and 80 wt% or less, 70 wt% or less, or 60 wt% or less.

When the moisture content of the polymer is too low, it may not be effectively pulverized because it is difficult to secure an appropriate surface area in the subsequent pulverization step. When the moisture content of the polymer is too high, it may be difficult to pulverize the polymer to a desired particle size due to increased pressure applied in the subsequent pulverization step.

At this time, "moisture content" in the present disclosure is the content of moisture in the entire weight of the polymer, and it means a value of which the weight of the dried polymer is subtracted from the weight of the polymer. Specifically, the moisture content is defined as a value calculated by measuring the weight loss due to moisture evaporation from the polymer in the process of increasing the temperature of the polymer in a crumb state and drying the same through infrared heating. At this time, the drying condition for measuring the moisture content is as follows: the temperature is increased to about 180 °C and maintained at 180 °C, and the total drying time is 40 minutes including 5 minutes of a heating step.

Step 2: Micronization step

Next, a step of micronizing the polymer at a rotation speed of 500 rpm to 4,000 rpm is performed. This is a step in which the polymer is not chopped to millimeters, but cut to tens to hundreds of micrometers and agglomerated at the same time. In this step, a high-intensity mechanical shear force is applied, so fine pores of 100 μm or less are easily formed in the polymer, which increases the surface roughness and significantly increases the total surface area of the polymer due to the pores formed inside and outside the polymer particles. Since the fine pores are formed in a more stable form than the pores formed using a foaming agent in the polymerization step, the generation of fine particles by the pores in the subsequent process can be significantly reduced. The surface area of the super absorbent polymer particles prepared through this step is greatly increased, and the absorption rate can be significantly improved.

FIG. 2 shows an SEM image of the final super absorbent polymer prepared after the micronization process of step 2 in the preparation method of a super absorbent polymer according to one embodiment of the present disclosure, and it is confirmed that fine pores are evenly formed inside and outside the polymer.

The micronization process is performed at a rotation speed of 500 rpm to 4,000 rpm. When the rotation speed of the process is less than 500 rpm, it is difficult to form sufficient pores as desired, so it is difficult to expect a fast absorption rate and productivity desired in this disclosure. Further, when the rotation speed exceeds 4,000 rpm, the polymer chain may be damaged by excessive shear force, and as a result, the extractable contents may increase and the overall physical properties of the prepared super absorbent polymer may be deteriorated. Preferably, the micronization process may be performed at 1,500 rpm to 3,500 rpm, or 2,000 rpm to 3,000 rpm. Within this range, it is easy to form the desired micropores without the problems described above.

According to one embodiment of the present disclosure, the micronization step is performed by applying a high-intensity mechanical shear force, and therefore, the step is performed by a high-shear pulverizing machine.

The high-shear pulverizing machine may include a body comprising a transfer space in which a polymer is transferred; a screw part rotatably installed inside the transfer space to move the polymer; a driving motor providing rotational driving force to the screw part; a cutter part installed in the body to pulverize the polymer; and a perforated plate having a plurality of holes and capable of discharging the polymer pulverized by the cutter part to the outside of the body.

At this time, the rotation speed of the driving motor of the high-shear pulverizing machine is the same as the rotation speed in step 2 described above.

Additionally, the hole size provided in the perforated plate of the high-shear pulverizing machine may be 1 mm to 25 mm, 5 mm to 20 mm, or 5 mm to 15 mm.

When the micronization of the polymer is performed using a high-shear pulverizing machine, a smaller particle size distribution can be realized, and then the drying and pulverization processes can be performed under milder conditions, thereby preventing the generation of fine particles. At the same time, appropriate micropores are formed on the

surface of the polymer to increase the surface area, thereby significantly improving the absorption rate.

According to one embodiment of the present disclosure, the micronization may be performed one or more times, preferably 1 to 6 times, 1 to 4 times, or 1 to 3 times. It may be performed using a plurality of pulverizing machines, or using a single pulverizing machine including a plurality of perforated plates and/or a plurality of cutter parts. Alternatively, some of the plurality of pulverizing machines may include a plurality of perforated plates and/or a plurality of cutter parts.

According to one embodiment of the present disclosure, a surfactant may be additionally used in the micronization step, and accordingly, agglomeration of polymer particles can be effectively controlled. Therefore, productivity can be further improved by lowering the load on the machine used in the pulverization.

Preferably, the surfactant may be a compound represented by the following Chemical Formula 2 or a salt thereof, but the present disclosure is not limited thereto:

[Chemical Formula 2]

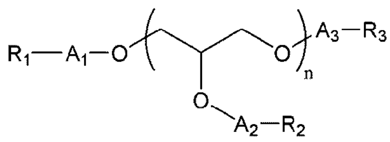

in Chemical Formula 2,

$A_1$, $A_2$ and $A_3$ are each independently a single bond, carbonyl,

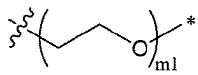,

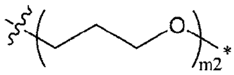 or 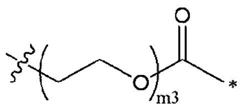,

provided that at least one of these is carbonyl, or

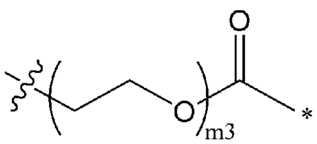,

wherein m1, m2 and m3 are each independently an integer of 1 to 8, each

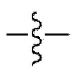

is connected to an adjacent oxygen atom, and -* is connected to adjacent $R_1$, $R_2$ and $R_3$, respectively,

$R_1$, $R_2$ and $R_3$ are each independently hydrogen, C6 to C18 linear or branched alkyl or C6 to C18 linear or branched alkenyl, and

n is an integer of 1 to 9.

The surfactant is mixed with the polymer and added so that the micronization step can be easily performed without agglomeration.

The surfactant represented by the Chemical Formula 2 is a nonionic surfactant and has excellent surface adsorption performance by hydrogen bonding even with an unneutralized polymer, and thus is suitable for realizing a desired agglomeration control effect. On the other hand, in the case of an anionic surfactant other than the nonionic surfactant, when mixed with a polymer neutralized with a neutralizing agent such as NaOH or $Na_2SO_4$, it is adsorbed via the $Na^+$ ion ionized at the carboxyl substituent of the polymer. When mixed with an unneutralized polymer, there is a

problem in that adsorption efficiency for the polymer is relatively lowered due to competition with the anion of the carboxyl substituent of the polymer.

Specifically, in the surfactant represented by the Chemical Formula 2, the hydrophobic functional group is the terminal functional group of $R_1$, $R_2$, and $R_3$ (if not hydrogen), and the hydrophilic functional group includes the glycerol-derived part in the chain and the terminal hydroxyl group (when $A_n$ is a single bond and $R_n$ is hydrogen, n=1~3). Herein, the glycerol-derived part and the terminal hydroxyl group are hydrophilic functional groups and serve to improve adsorption performance to the polymer surface. Accordingly, agglomeration of the super absorbent polymer particles can be effectively suppressed.

In Chemical Formula 2, the hydrophobic functional groups of $R_1$, $R_2$, and $R_3$ (if not hydrogen) are each independently C6 to C18 linear or branched alkyl or C6 to C18 linear or branched alkenyl. At this time, when $R_1$, $R_2$, and $R_3$ (if not hydrogen) are alkyl or alkenyl having less than 6 carbon atoms, there is a problem in that the chain length is too short to effectively control the agglomeration of the pulverized particles. When $R_1$, $R_2$, and $R_3$ (if not hydrogen) are alkyl or alkenyl having more than 18 carbon atoms, there may be problems in that the surfactant has reduced mobility and may not be effectively mixed with the polymer, and the unit price of the composition increases due to the increase in cost of the surfactant.

Preferably, $R_1$, $R_2$, and $R_3$ are hydrogen, C6 to C18 linear or branched alkyl such as 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or C6 to C18 linear or branched alkenyl such as 2-hexenyl, 2-heptenyl, 2-octenyl, 2-nonenyl, n-decenyl, 2-undecenyl, 2-dodekenyl, 2-tridekenyl, 2-tetradekenyl, 2-pentadekenyl, 2-hexadekenyl, 2-heptadekenyl, or 2-octadekenyl.

The surfactant may be selected from compounds represented by the following Chemical Formulae 2-1 to 2-14:

[Chemical Formula 2-1]

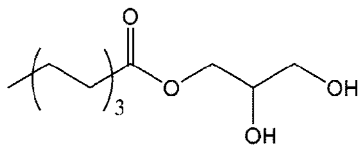

[Chemical Formula 2-2]

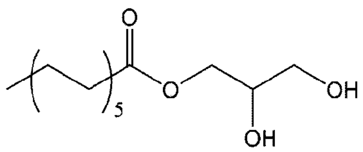

[Chemical Formula 2-3]

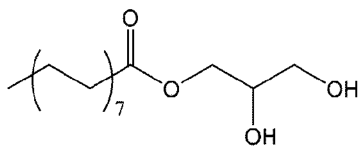

[Chemical Formula 2-4]

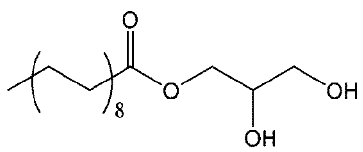

[Chemical Formula 2-5]

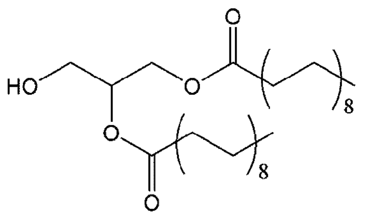

[Chemical Formula 2-6]

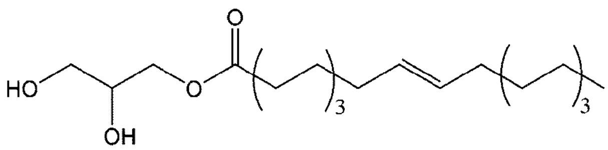

[Chemical Formula 2-7]

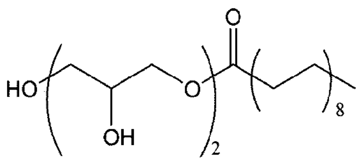

[Chemical Formula 2-8]

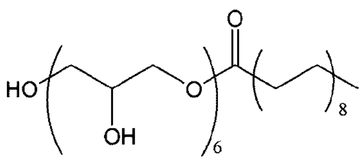

[Chemical Formula 2-9]

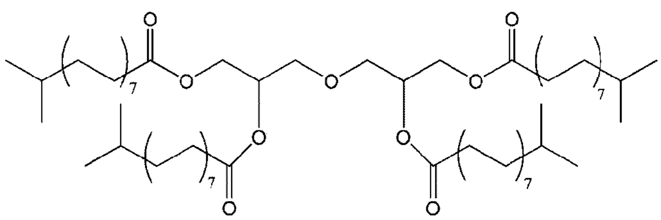

[Chemical Formula 2-10]

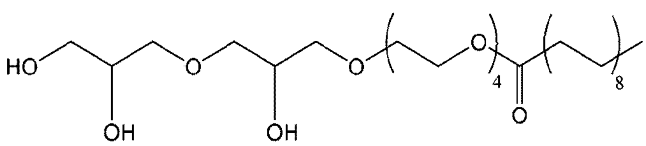

[Chemical Formula 2-11]

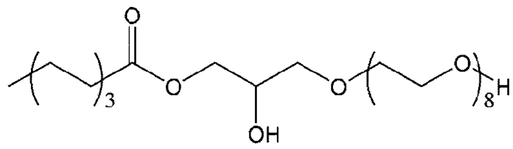

[Chemical Formula 2-12]

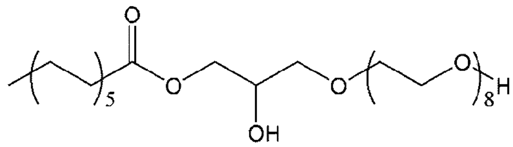

[Chemical Formula 2-13]

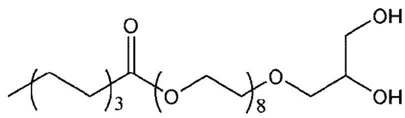

[Chemical Formula 2-14]

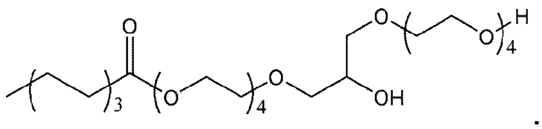

Meanwhile, the amount of the surfactant used is not particularly limited, but may be about 3 parts by weight or less, preferably 2 parts by weight or less, 1 part by weight or less, 0.5 parts by weight or less, 0.1 parts by weight or less, 0.01 parts by weight or less, or 0.001 parts by weight or less, and 0.0001 parts by weight or more based on 100 parts by weight of the polymer, depending on productivity or equipment load. When too much surfactant is used, the surface tension is lowered, and thus overall physical properties of the final super absorbent polymer may be deteriorated.

The method of mixing the surfactant with the polymer is not particularly limited, and may be appropriately selected as long as it is a method capable of evenly mixing the additive with the polymer. Specifically, the surfactant may be dry-mixed, dissolved in a solvent and then mixed in a solution state, or melted and then mixed.

For example, the surfactant may be mixed in the form of a solution dissolved in a solvent. At this time, all kinds of solvents including inorganic solvents and organic solvents may be used without limitation, but water is most appropriate considering the ease of the drying process and the cost of the solvent recovery system. Further, a method of adding the surfactant in the form of a solution and the polymer in a reaction tank for mixing, a method of spraying the solution after adding the polymer in a mixer, a method of continuously supplying the polymer and the solution to a continuously operating mixer for mixing, or the like may be used.

Step 3: Neutralization step

According to one embodiment of the present disclosure, the step of neutralizing at least some of the acidic groups of the polymer (step) is performed, and the above-described micronization step of step 2 and the neutralization step of step 3 may be performed sequentially, alternately, or simultaneously.

In other words, a neutralizing agent may be added to the polymer to first neutralize the acidic groups, and then a surfactant may be added to the neutralized polymer to micronize the polymer mixed with the surfactant (perform in the order of step 3 -> step 2). Alternatively, neutralization and micronization may be performed on the polymer by simultaneously adding a neutralizing agent and a surfactant to the polymer (perform step 2 and step 3 simultaneously). Alternatively, a surfactant may be added first and a neutralizing agent may be added later (perform in the order of step 2 -> step 3). Alternatively, a neutralizing agent and a surfactant may be added alternately. Alternatively, a surfactant may be first

added to micronize, then a neutralizing agent may be added to neutralize the product, and then an additional surfactant may be added to the neutralized hydrogel polymer to further perform the micronization process.

Herein, when the neutralization step is performed independently from the micronization step of step 2, it may be performed by pulverizing the polymer while adding additives. More specifically, a screw-type extruder including a perforated plate with a plurality of holes may be used. The screw-type extruder is a device that performs pulverization under milder conditions than the high-shear pulverizing machine used in the micronization step described above. The rotation speed may be about 50 rpm to 500 rpm, and the hole of the perforated plate may be about 3 mm to 25 mm, but not limited thereto.

Herein, a basic material such as sodium hydroxide, potassium hydroxide, or ammonium hydroxide capable of neutralizing the acidic group may be used as the neutralizing agent.

In addition, the degree of neutralization, which refers to the degree of neutralization by the neutralizing agent among the acidic groups included in the polymer, may preferably be 50 to 90 mol%, 60 to 85 mol%, 65 to 85 mol%, or 65 to 75 mol%. A range of the degree of neutralization may vary depending on the final physical properties. When the degree of neutralization is excessively high, the absorbency of the super absorbent polymer may decrease, and the concentration of carboxyl groups on the surface of the particles is too low, making it difficult to properly perform surface cross-linking in a subsequent process, resulting in reduced absorbency under pressure or liquid permeability. On the contrary, an excessively low degree of neutralization not only deteriorates absorbency of the polymer, but also gives the polymer hard-to-handle properties, such as those of an elastic rubber.

Meanwhile, in order to evenly neutralize the entire polymer, it may be desirable to leave a certain time gap between the addition of the neutralizing agent and the micronization process.

Step 4: Drying step

Next, a step (step 4) of drying the micronized and neutralized polymer to prepare dried super absorbent polymer particles is performed.

This step is a step of drying the moisture in the super absorbent polymer particles obtained by neutralizing at least some of the acidic groups of the polymer and micronizing the polymer.

In a typical method for producing a super absorbent polymer, the drying step is performed so that the moisture content of the super absorbent polymer is about 1 to 20 wt%, about 4 to about 15 wt%, or about 6 to about 13 wt%. However, the present disclosure is not limited thereto.

The step 4 may be performed by a method of fixed-bed type drying, moving type drying, or a combination thereof.

According to one embodiment of the present disclosure, the step 4 may be performed by a method of fixed-bed type drying.

The fixed-bed type drying refers to a method in which a material to be dried is fixed on a floor such as a porous iron plate through which air can pass, and hot air passes through the material from bottom to top to dry.

Since fixed-bed type drying is dried in a plate shape without particle flow, it is difficult to perform uniform drying simply with a flow of hot air. Therefore, fixed-bed type drying requires delicate control of hot air and temperature to obtain a uniform dried product with a high moisture content. In the present disclosure, the leakage of hot air was prevented by preventing the bending of the plate-shaped dried product during drying through a method of changing the hot air from the bottom to the top. In addition, the drying temperature was changed for each section so that the top, bottom, left, and right layers and the upper, middle, and lower layers inside the dried product could be dried uniformly with a moisture content deviation of less than 5%.

As a device capable of drying by such a fixed-bed type drying manner, a belt type dryer or the like may be used, but is not limited thereto.

The fixed-bed type drying may be performed at a temperature of about 80 °C to 200 °C, preferably at 90 °C to 200 °C, 100 °C to 200 °C, or 100 °C to 180 °C. When the temperature is too low, such as less than 80 °C, the drying time may become excessively long. When the drying temperature is too high, such as more than 200 °C, a super absorbent polymer having a moisture content lower than a desired moisture content may be obtained. Meanwhile, the drying temperature may mean the temperature of the hot air used, or the temperature inside the device during the drying process.

According to one embodiment of the present disclosure, the step 4 may be performed by moving-type drying.

The moving-type drying refers to a method of drying while mechanically stirring a material to be dried. At this time, the direction in which hot air passes through the material may be the same as or different from the circulation direction of the material. Alternatively, the material may be circulated inside the dryer, and dried by passing heat transfer fluids through a separate pipe outside the dryer.

As a device capable of drying by such a moving-type drying manner, a horizontal-type mixer, a rotary kiln, a paddle dryer, a steam tube dryer, or a generally used moving-type dryer can be used.

The moving-type drying may be performed at a temperature of about 100 °C to 300 °C, preferably at 120 °C to 280 °C, or 150 °C to 250 °C. When the temperature is too low, such as less than 100 °C, the drying time may become

excessively long. When the drying temperature is too high, such as more than 300 °C, the polymer chain of the super absorbent polymer may be damaged, resulting in deterioration of physical properties, and a super absorbent polymer having a moisture content lower than a desired moisture content may be obtained.

Step 5: Pulverization step

Subsequently, a step of preparing super absorbent polymer particles by pulverizing the dried super absorbent polymer particles is performed.

Specifically, the pulverizing step may be performed to have a normal particle diameter, that is, a particle diameter of 150 μm to 850 μm by pulverizing the dried super absorbent polymer particles.

The pulverizing machine used for this purpose may be a vertical pulverizer, a turbo cutter, a turbo grinder, a rotary cutter mill, a cutter mill, a disc mill, a shred crusher, a crusher, a chopper or a disc cutter, but the present disclosure is not limited thereto.

Alternatively, a pin mill, a hammer mill, a screw mill, a roll mill, a disc mill, or a jog mill may be used as the pulverizing machine, but the present disclosure is not limited thereto.

Meanwhile, in the micronization step of the preparation method of the present disclosure, super absorbent polymer particles having a smaller particle size distribution than in the conventional chopping step can be provided, and the moisture content after drying is maintained relatively high. Therefore, even if pulverization is performed under mild conditions with less force, a super absorbent polymer having a very high content of normal particles, which have a particle diameter of 150 μm to 850 μm, can be formed, thereby greatly reducing the generation of fine particles.

The super absorbent polymer particles prepared as described above may include 80 wt% or more, 85 wt% or more, 89 wt% or more, 90 wt% or more, 92 wt% or more, 93 wt% or more, 94 wt% or more, or 95 wt% or more of super absorbent polymer particles having a particle diameter of 150 μm to 850 μm, which are normal particles, based on the total weight. The particle diameter of these polymer particles may be measured according to EDANA (European Disposables and Nonwovens Association) WSP 220.3.

In addition, the super absorbent polymer particles may include about 20 wt% or less, about 18 wt% or less, about 15 wt% or less, about 13 wt% or less, about 12 wt% or less, about 111 wt% or less, about 10 wt% or less, about 9 wt% or less, about 8 wt% or less, or about 5 wt% or less of fine particles having a particle diameter of less than 150 μm based on the total weight. This is in contrast to the super absorbent polymer prepared according to a conventional preparation method, which has greater than about 20 wt% to about 30 wt% of fine particles.

Additive addition step

Meanwhile, according to one embodiment of the present disclosure, a step of adding an additive to the micronized and neutralized polymer may be further included before the drying step (step 4).

The additive addition process is a process for improving physical properties by using additional additives within a range that does not impair the desired effect, and the type of the additive is not particularly limited. For example, a polymerization initiator to remove residual monomers, a permeability improver to improve absorption properties, fine particles to recycle the generated fine particles, an anti-caking agent, a fluidity improver, an antioxidant, a neutralizing agent, a surfactant, etc. may be used, but the present disclosure is not limited thereto.

The additive addition step may be performed simultaneously with step 2, simultaneously with step 3, after step 2 and step 3, or in at least one of these steps. The additive addition step may be performed multiple times as needed, and may be performed once or multiple times in each step.

When the additive addition step is performed separately from steps 2 and 3, that is, when performed after steps 2 and 3 and before step 4, this may be performed in such a way that the additive is added while pulverizing the polymer.

The pulverization can generally be done in the same way as the pulverization step of step 5 described above. In the pulverization step, the additive may be added once or multiple times, and mixed with the polymer.

Classification step

After the step (step 5) of pulverizing the super absorbent polymer particles, a step of classifying the pulverized super absorbent polymer particles according to particle size may be further included.

Surface cross-linking step

Further, after pulverizing (step 5) and/or classifying the super absorbent polymer particles, a step of forming a surface cross-linked layer on at least a part of the surface of the super absorbent polymer particles in the presence of a surface cross-linking agent may be further included. Through the above step, the cross-linked polymer contained in the

super absorbent polymer particles may be further cross-linked by a surface cross-linking agent, thereby forming a surface cross-linked layer on at least a part of the surface of the super absorbent polymer particles.

As the surface cross-linking agent, any cross-linking agent that has been conventionally used in the preparation of a super absorbent polymer may be used without any particular limitation. Examples of the surface cross-linking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; at least one carbonate-based compound selected from the group consisting of ethylene carbonate, propylene carbonate and glycerol carbonate; an epoxy compound such as ethylene glycol diglycidyl ether; an oxazoline compound such as oxazolidinone; a polyamine compound; an oxazoline compound; a mono-, di- or poly-oxazolidinone compound; a cyclic urea compound; and the like.

Specifically, one or more, two or more, or three or more of the surface cross-linking agents described above may be used as the surface cross-linking agent. For example, ethylene carbonate-propylene carbonate (ECPC), propylene glycol and/or glycerol carbonate may be used.

The surface cross-linking agent may be used in an amount of 0.001 to 5 parts by weight based on 100 parts by weight of the super absorbent polymer particles. For example, it may be used in an amount of 0.005 parts by weight or more, 0.01 parts by weight or more, or 0.05 parts by weight or more, and 5 parts by weight or less, 4 parts by weight or less, or 3 parts by weight or less. When adjusting the content range of the surface cross-linking agent within the above-described range, a super absorbent polymer exhibiting excellent various physical properties can be prepared.

In addition, the step of forming the surface cross-linked layer may be performed by adding an inorganic material in addition to the surface cross-linking agent. That is, in the presence of the surface cross-linking agent and the inorganic material, the step of forming a surface cross-linked layer by further cross-linking the surface of the super absorbent polymer particles may be performed.

As the inorganic material, at least one inorganic material selected from the group consisting of silica, clay, alumina, silica-alumina composite, titania, zinc oxide and aluminum sulfate may be used. The inorganic material may be used in a powdery form or in a liquid form, and in particular, alumina powder, silica-alumina powder, titania powder, or nanosilica solution may be used. In addition, the inorganic material may be used in an amount of about 0.001 to about 1 part by weight based on 100 parts by weight of the super absorbent polymer particles.

In addition, the method of mixing the surface cross-linking agent with the super absorbent polymer is not particularly limited. For example, a method of adding the surface cross-linking agent and the super absorbent polymer composition in a reactor for mixing, a method of spraying the surface cross-linking agent onto the super absorbent polymer composition, or a method of mixing the super absorbent polymer composition and the surface cross-linking agent while continuously providing them to a continuously operating mixer may be used.

When mixing the surface cross-linking agent and the super absorbent polymer composition, water and methanol may be further mixed therewith. When water and methanol are added thereto, there is an advantage that the surface cross-linking agent may be evenly dispersed in the super absorbent polymer composition. At this time, amounts of water and methanol to be added may be properly controlled for the purposes of inducing a uniform dispersion of the surface cross-linking agent, preventing an agglomeration phenomenon of the super absorbent polymer composition, and optimizing a surface penetration depth of the cross-linking agent.

The surface cross-linking process may be performed at a temperature of about 80 °C to about 250 °C. More specifically, the surface cross-linking process may be performed at a temperature of about 100 °C to about 220 °C, or about 120 °C to about 200 °C for about 20 minutes to about 2 hours, or about 40 minutes to about 80 minutes. When the above-described surface cross-linking process conditions are satisfied, the surface of the super absorbent polymer particles is sufficiently cross-linked to increase absorbency under pressure.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto.

Post-treatment step

According to one embodiment of the present disclosure, after forming a surface cross-linked layer on at least a part of the surface of the super absorbent polymer particles, at least one step of a cooling step of cooling the super absorbent polymer particles on which the surface cross-linked layer is formed, a hydration step of adding water to the super absorbent polymer particles on which the surface cross-linked layer is formed, and a post-treatment step of adding an additive to the super absorbent polymer particles on which the surface cross-linked layer is formed may be further performed. At this time, the cooling step, hydration step, and post-treatment step may be performed sequentially or

simultaneously.

Water or brine may be used in the hydration step, and thus the generation of residue, etc., can be controlled. The amount of water used can be appropriately adjusted considering the moisture content of the desired final product, and is preferably used in an amount of 0.1 to 10 wt%, 0.5 to 8 wt%, or 1 to 5 wt% based on the super absorbent polymer, but not limited thereto.

Additionally, an aging step may be further performed after the hydration step.

When brine is used in the hydration step, the solution absorption rate is relatively low due to the conductivity of the brine, so that the brine spreads evenly during the aging step, enabling even absorption of the absorbent polymer. The aging step may be performed by a commonly used method without particular limitation, for example, using a rotary stirring device at 100 °C or lower, 80 °C or lower, preferably 50 °C or lower for 10 minutes to 1 hour.

The additive added in the post-treatment step may include surfactants, inorganic salts, permeability improvers, anti-caking agents, fluidity improver, antioxidants, and the like, but the present disclosure is not limited thereto.

When optionally performing the cooling step, hydration step, and post-treatment step, the generation of residue is controlled to improve the moisture content of the final super absorbent polymer, and a high quality super absorbent polymer product can be manufactured.

Super absorbent polymer

The super absorbent polymer prepared by the above preparation method has a fast absorption rate and low fine particle content, and may exhibit similar or higher centrifuge retention capacity (CRC) and absorbency under pressure (AUP), which are general absorption performance, compared to the super absorbent polymer prepared by the conventional method.

In addition, it is possible to provide a super absorbent polymer with excellent permeability and rewet characteristics by narrowing the particle size distribution to have a uniform particle size distribution, and lowering the extractable contents (EC).

The super absorbent polymer according to one embodiment may have an absorption rate (vortex time) according to the vortex method of 30 seconds or less, 28 seconds or less, 27 seconds or less, 26 seconds or less, 25 seconds or less, 24 seconds or less, 23 seconds or less, 22 seconds or less, 21 seconds or less, 20 seconds or less, 19 seconds or less, or 18 seconds or less. As the lower vortex time can be evaluated as the better, the lower limit is theoretically 0 seconds, but may be 5 seconds or more, 10 seconds or more, or 12 seconds or more.

Hereinafter, the function and effect of the present invention will be described in more detail through specific examples. However, these examples are for illustrative purposes only, and the invention is not intended to be limited by these examples.

<Examples>

Example 1

(Step 1: Preparation of polymer)

In a 5L glass container equipped with a stirrer and a thermometer, 1404 g of acrylic acid, 4.5 g of pentaerythritol triallyl ether as an internal cross-linking agent, and 3387 g of water were stirred and mixed, and reacted while maintaining the temperature at 5 °C. The glass container containing the mixture was replaced with nitrogen conditions by flowing 1000 cc/min of nitrogen for 1 hour. Thereafter, 0.2 g of 30 wt% aqueous solution of hydrogen peroxide, 20.0 g of 1.6% aqueous solution of ascorbic acid, and 44 g of 1% aqueous solution of 2,2'-azobis-(2-amidinopropane) dihydrochloride were added as a polymerization initiator, and at the same time, 10 g of 0.01% aqueous solution of iron sulfate was added to initiate polymerization. After the temperature of the mixture reached 85 °C, polymerization was performed at 90±2 °C for about 6 hours to obtain a polymer.

(Steps 2 and 3: Micronization, neutralization, and addition of additional additive)

Glycerol Monolaurate (GML) was added to 1,000 g of the polymer obtained in step 1 in the form of an aqueous solution by dissolving it in water at 60 °C at a ratio of 0.01 g per 1,000 g of the hydrogel polymer. Afterwards, micronization was performed by extruding it at a rotation speed of 2,500 rpm to a perforated plate with a plurality of 10 mm holes using a high-speed rotating shredder (F-150/Karl Schnell) mounted inside a cylindrical pulverizing machine.

Afterwards, the recovered hydrogel polymer was extruded three times at a rotation speed of 250 rpm to a perforated plate with a plurality of 10 mm holes using a screw-type extruder mounted inside the cylindrical pulverizing machine to perform an additional pulverization process. 340 g of 32% NaOH aqueous solution (step 3: neutralization step)

was added to each step of the screw-type extruder to neutralize some of the acidic groups of the polymer. Then, 100 g of fine particles and 35.5 g of 5% $Na_2SO_4$ aqueous solution were respectively added in the additional additive addition step to prepare hydrated super absorbent polymer particles (=micronized and neutralized polymer).

(Step 4: Drying)

1,000 g of the hydrated super absorbent polymer particles were added to a ventilated belt-type dryer equipped with a perforated plate capable of changing wind direction up and down. The polymer was uniformly dried by flowing hot air at 200 °C and 100 °C sequentially from top to bottom for 5 and 10 minutes, respectively, and then flowing hot air at 100 °C from bottom to top for 15 minutes to prepare a dried super absorbent polymer having a moisture content of about 10%.

(Step 5: Pulverization and classification)

The dried super absorbent polymer was pulverized using a pulverizing machine (GRAN-U-LIZERTM, MPE), and then classified using an ASTM standard sieve to obtain super absorbent polymer powder with a size of 150 to 850 μm.

(Surface cross-linking)

Thereafter, 6 g of an aqueous surface cross-linking solution containing 0.08 g of ethylene glycol diglycidyl ether (EJ-1030J) and 0.3 g of propylene glycol was sprayed on to 100 g of the super absorbent polymer, and stirred at room temperature to evenly distribute the surface cross-linking solution on the super absorbent polymer powder. Then, the super absorbent polymer powder mixed with the surface cross-linking solution was placed in the surface cross-linking reactor and a surface cross-linking reaction was performed. In this surface cross-linking reactor, the super absorbent polymer powder underwent surface cross-linking reaction at about 140 °C for 40 minutes to obtain a surface cross-linked super absorbent polymer.

After the surface cross-linking process, a super absorbent polymer having a particle diameter of 150 μm to 850 μm was prepared by classification using an ASTM standard sieve.

Example 2

A super absorbent polymer was prepared in the same manner as in Example 1, except that 1,000 g of hydrated super absorbent polymer particles were added to a rotary kiln dryer, which is a moving type dryer, and drying was performed for 35 minutes while maintaining the temperature inside the dryer at 210 °C in the drying step of step 4 of Example 1.

Example 3

A super absorbent polymer was prepared in the same manner as in Example 1, except that 3.5 g of pentaerythritol triallyl ether (PETTAE) and 1.0 g of polyetherpolyol triacrylate were used as the internal cross-linking agent in the polymerization step of step 1 of Example 1.

Example 4

A super absorbent polymer was prepared in the same manner as in Example 1, except that 3.5 g of pentaerythritol triallyl ether (PETTAE) and 1.0 g of ethylene glycol diglycidyl ether (EJ-1030J) were used as the internal cross-linking agent in the polymerization step of step 1 of Example 1.

Example 5

A super absorbent polymer was prepared in the same manner as in Example 1, except that the additional additive addition step was changed by adding 10 g of 1% aqueous solution of sodium persulfate ($Na_2S_2O_8$) and 10 g of 1% aqueous solution of sodium metabisulfite ($Na_2S_2O_5$) after the neutralization step of step 3 of Example 1.

Example 6

A super absorbent polymer was prepared in the same manner as in Example 1, except that the rotation speed of the high-speed rotating shredder was adjusted to 3,400 rpm in the micronization step of step 2 of Example 1.

Example 7

A super absorbent polymer was prepared in the same manner as in Example 1, except that GML, a surfactant, was not used in the micronization step of step 2 of Example 1.

Comparative Example 1

(Step 1': Polymer preparation- pre-neutralization foaming polymerization)

In a 5L glass container equipped with a stirrer and a thermometer, 982 g of acrylic acid, 2.25 g of ethylene glycol diglycidyl ether as an internal cross-linking agent, 0.25 g of diphenyl(2,4,6-trimethylbenzoyl) phosphine oxide as a photopolymerization initiator, 1.8 g of F-36D as a capsule-type foaming agent, 0.22 g of sodium dodecyl sulfate as a foaming stabilizer and 445.5 g of water were mixed to prepare a monomer composition. Subsequently, the monomer solution was continuously supplied using a metering pump, and at the same time, 1230.1 g of 31 wt% aqueous solution of sodium hydroxide was continuously line mixed to prepare an aqueous monomer solution. At this time, after confirming that the temperature of the aqueous monomer solution had risen to about 72 °C or higher due to the heat of neutralization, it was left until the temperature cooled to 40 °C. When the temperature was cooled to 40 °C, 71.2 g of 2 wt% aqueous solution of sodium persulfate was added thereto. The solution was poured into a Vat-type tray (15 cm wide x 15 cm long) installed in a square polymerizer, wherein the polymerizer was provided with a light irradiation device on the top and preheated to 80 °C, and then light irradiation was performed to initiate polymerization. It was confirmed that a gel was generated from the surface about 15 seconds after light irradiation, and a polymerization reaction occurred simultaneously with foaming after about 30 seconds. After further reacting for 3 minutes, a sheet-type hydrogel polymer was obtained.

(Step 2': Pulverization)

The hydrogel polymer prepared in step 1 was cut into a size of 5 cm in width and 5 cm in length, and pulverized using a screw-type shredder (meat chopper) equipped with a perforated plate containing multiple holes. At this time, the rotation speed of the screw-type shredder was 160 rpm, and the hole size of the perforated plate was 16 mm.

(Step 3': Drying)

1,000 g of the hydrated super absorbent polymer particles were added to a ventilated belt-type dryer equipped with a perforated plate capable of changing wind direction up and down. The polymer was uniformly dried by flowing hot air at 180 °C from bottom to top for 20 minutes, and then flowing hot air from top to bottom for 20 minutes to prepare a dried super absorbent polymer having a moisture content of about 3%.

(Step 4': Pulverization and classification)

The dried super absorbent polymer was pulverized using a pulverizing machine (GRAN-U-LIZERTM, MPE), and then classified using an ASTM standard sieve to obtain super absorbent polymer powder with a size of 150 to 850 μm.

(Step 5': Surface cross-linking)

Thereafter, 6 g of an aqueous surface cross-linking solution containing 0.08 g of ethylene glycol diglycidyl ether (EJ-1030J) and 0.3 g of propylene glycol was sprayed on to 100 g of the super absorbent polymer, and stirred at room temperature to evenly distribute the surface cross-linking solution on the super absorbent polymer powder. Then, the super absorbent polymer powder mixed with the surface cross-linking solution was placed in the surface cross-linking reactor and a surface cross-linking reaction was performed. In this surface cross-linking reactor, the super absorbent polymer powder underwent surface cross-linking reaction at about 140 °C for 40 minutes to obtain a surface cross-linked super absorbent polymer.

After the surface cross-linking process, a super absorbent polymer having a particle diameter of 150 μm to 850 μm was prepared by classification using an ASTM standard sieve.

Comparative Example 2

A super absorbent polymer was prepared in the same manner as in Example 1, except that the rotation speed of the high-speed rotating shredder was adjusted to 4,500 rpm in the micronization step of step 2 of Example 1.

Comparative Example 3

A super absorbent polymer was prepared in the same manner as in Example 1, except that the rotation speed of the high-speed rotating shredder was adjusted to 500 rpm in the micronization step of step 2 of Example 1.

Comparative Example 4

(Step 1': Polymer preparation- pre-neutralization foaming polymerization)

100 g of acrylic acid, 0.6 g of polyethylene glycol diacrylate (PEGDA, Mn=523) as a cross-linking agent, 0.008 g of bis(2,4,6-trimethylbenzoyl)-phenylphosphinoxide as a photoinitiator, and 0.10 g of sodium persulfate (SPS) as a thermal initiator, 0.30 g of sodium bicarbonate (SBC) as a foaming agent, 0.03 g of sodium dodecyl sulfate (SDS) as a surfactant, 123.3 g of 31.5% caustic soda (NaOH), and 38.53 g of water were mixed to prepare an aqueous monomer solution. When the aqueous monomer solution was cooled and the final temperature reached 40 °C, the aqueous monomer solution was poured into a tray, and subjected to UV polymerization for 1 to 3 minutes by irradiating ultraviolet rays (irradiation amount: 10 mV/cm$^2$) with a UV irradiation device while maintaining the polymerization atmosphere temperature of 80 °C to prepare a hydrogel polymer sheet.

(Step 2': Micronization)

Glycerol Monolaurate (GML) was added to 100 g of the polymer obtained in step 1 in the form of an aqueous solution by dissolving it in water at 60 °C at a ratio of 0.001 g per 100 g of the hydrogel polymer. Afterwards, micronization was performed by extruding it at a rotation speed of 2,500 rpm to a perforated plate with a plurality of 10 mm holes using a high-speed rotating shredder (F-150/Karl Schnell) mounted inside a cylindrical pulverizing machine.

Afterwards, the recovered hydrogel polymer was extruded three times at a rotation speed of 250 rpm to a perforated plate with a plurality of 10 mm holes using a screw-type extruder mounted inside the cylindrical pulverizing machine to perform an additional pulverization process, thereby preparing hydrated super absorbent polymer particles.

(Step 3': Drying)

100 g of the hydrated super absorbent polymer particles were added to a ventilated belt-type dryer equipped with a perforated plate capable of changing wind direction up and down. The polymer was uniformly dried by flowing hot air at 200 °C and 100 °C sequentially from top to bottom for 5 and 10 minutes, respectively, and then flowing hot air at 100 °C from bottom to top for 15 minutes to prepare a dried super absorbent polymer having a moisture content of about 10%.

(Step 4': Pulverization and classification)

The dried super absorbent polymer was pulverized using a pulverizing machine (GRAN-U-LIZERTM, MPE), and then classified using an ASTM standard sieve to obtain super absorbent polymer powder with a size of 150 to 850 μm.

(Step 5': Surface cross-linking)

Thereafter, 6 g of an aqueous surface cross-linking solution containing 0.08 g of ethylene glycol diglycidyl ether (EJ-1030J) and 0.3 g of propylene glycol was sprayed on to 100 g of the super absorbent polymer, and stirred at room temperature to evenly distribute the surface cross-linking solution on the super absorbent polymer powder. Then, the super absorbent polymer powder mixed with the surface cross-linking solution was placed in the surface cross-linking reactor and a surface cross-linking reaction was performed. In this surface cross-linking reactor, the super absorbent polymer powder underwent surface cross-linking reaction at about 140 °C for 40 minutes to obtain a surface cross-linked super absorbent polymer.

After the surface cross-linking process, a super absorbent polymer having a particle diameter of 150 μm to 850 μm was prepared by classification using an ASTM standard sieve.

Comparative Example 5

A super absorbent polymer was prepared in the same manner as in Comparative Example 4, except that the rotation speed of the high-speed rotating shredder was adjusted to 1,500 rpm in the micronization step of step 2' of Comparative Example 4.

<Experimental Examples>

The physical properties of the super absorbent polymer obtained in each of Examples and Comparative Examples were evaluated in the following manner and are listed in Table 1 below.

Unless otherwise indicated, all procedures were conducted in a constant temperature and humidity room (23±1 °C, relative humidity of 50±10%), and physiological saline or saline means a 0.9 wt% sodium chloride (NaCl) aqueous solution.

In addition, tap water used in the rewet evaluation has an electrical conductivity of 170 to 180 μS/cm when measured using Orion Star A222 (Company: Thermo Scientific).

Unless otherwise indicated, physical properties of the final surface cross-linked super absorbent polymer were evaluated for polymers with a particle diameter of 150 μm to 850 μm classified with an ASTM standard sieve.

(1) Centrifuge retention capacity (CRC)

The centrifugal retention capacity by absorption ratio under a non-loading condition of the super absorbent polymer prepared in Examples and Comparative Examples was measured in accordance with the EDANA (European Disposables and Nonwovens Association) WSP 241.3.

Specifically, after inserting $W_0$ (g, about 0.2 g) of the super absorbent polymer prepared in each of Examples and Comparative Examples uniformly in a nonwoven fabric envelope and sealing the same, it was soaked in physiological saline (0.9 wt% sodium chloride aqueous solution) at room temperature. After 30 minutes, the envelope was centrifuged at 250G for 3 minutes to drain, and the mass $W_2$ (g) of the envelope was measured. Further, after carrying out the same operation without using the polymer, the mass $W_1$ (g) of the envelope was measured.

Then, CRC (g/g) was calculated using the obtained mass values according to the following Equation 1.

[Equation 1]

$$CRC\ (g/g) = \{[W_2(g) - W_1(g)]/W_0(g)\} - 1$$

(2) Absorbency under pressure (AUP)

The absorbency under pressure at 0.3 psi of the super absorbent polymer prepared in Examples and Comparative Examples was measured in accordance with the EDANA WSP 242.3.

Specifically, a 400 mesh stainless steel screen was installed in a cylindrical bottom of a plastic having an inner diameter of 25 mm. $W_0$ (g, 0.9 g) of the super absorbent polymer was uniformly scattered on the screen at room temperature and a humidity of 50%. Thereafter, a piston which can uniformly provide a load of 0.3 psi was placed thereon. Herein, the outer diameter of the piston was slightly smaller than 25 mm, there was no gap with the inner wall of the cylinder, and jig-jog of the cylinder was not interrupted. At this time, the weight $W_3$ (g) of the device was measured.

Subsequently, a glass filter having a diameter of 90 mm and a thickness of 5 mm was placed in a petri dish having a diameter of 150 mm, and saline (0.9 wt% sodium chloride) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight $W_4$ (g) was measured.

Then, absorbency under pressure (g/g) was calculated by using the obtained mass values according to the following Equation 2.

[Equation 2]

$$AUP(g/g) = [W_4(g) - W_3(g)]/W_0(g)$$

The measurement was repeated 5 times, and the average value and standard deviation were obtained.

(3) Vortex time (absorption rate)

The vortex time was measured in seconds according to the method described in International Patent Publication No. 1987-003208.

Specifically, 2 g of super absorbent polymer was added to 50 mL of saline at 23 to 24 °C, and a magnetic bar (8 mm

in diameter, 30 mm in length) was stirred at 600 rpm to measure the time taken until the vortex disappeared in seconds.

(4) Tap water long term rewet under load (6hr Rewet)

① In a petri dish having a diameter of 13cm, 4 g of super absorbent polymer was uniformly scattered and uniformly distributed using a spatula, and 200g of tap water was poured, and then, the super absorbent polymer was swollen.
② On the super absorbent polymer swollen for 6 hours, 20 pieces of filter papers each having a diameter of 11 cm (manufacturing company: whatman, catalog No. 1004-110, pore size 20-25 μm, diameter 11 cm) were laid, and pressurized with a 5 kg weight (0.75 psi) for 1 minute.
③ After pressurization for 1 minute, the amount of tap water (unit: g) permeated in the filter papers was measured.

(5) Extractable contents (EC)

Extractable contents after swelling for 1 hour (1h EC) was measured for 2 g of super absorbent polymer according to the EDANA WSP 270.3.

(6) Fine particle content

The base resin (BR) powders of Examples and Comparative Examples were classified using an ASTM standard sieve with a scale of 850 μm (#20), 600 μm (#30), 300 μm (#50), and 150 μm (#100), and the weight of fine particles having a particle diameter of less than 150 μm was measured and expressed as a percentage based on the total weight of the base resin powder.

[Table 1]

| Category | CRC (g/g) | 0.3AUP (g/g) | Vortex time(sec) | Rewet (g) | EC (%) | Fine particle content (%) |
|---|---|---|---|---|---|---|
| Ex. 1 | 37.3 | 31.9 | 23 | 0.55 | 3.8 | 13.5 |
| Ex. 2 | 36.7 | 32.1 | 26 | 0.59 | 3.5 | 11.7 |
| Ex. 3 | 38.5 | 31.9 | 23 | 0.55 | 3.2 | 12.8 |
| Ex. 4 | 37.9 | 33.1 | 23 | 0.51 | 2.9 | 12.5 |
| Ex. 5 | 38.5 | 32.3 | 22 | 0.50 | 1.8 | 13.3 |
| Ex. 6 | 38.7 | 32.3 | 21 | 0.52 | 2.2 | 13.4 |
| Ex. 7 | 38.4 | 31.9 | 23 | 0.55 | 2.2 | 13.0 |
| Comp. Ex. 1 | 33.5 | 28.2 | 28 | 1.6 | 5.4 | 23.9 |
| Comp. Ex. 2 | 37.4 | 32.9 | 26 | 1.3 | 4.5 | 15.0 |
| Comp. Ex. 3 | 37.9 | 33.0 | 34 | 0.53 | 2.2 | 13.8 |
| Comp. Ex. 4 | 32.1 | 27.3 | 42 | 2.0 | 5.2 | 28.0 |
| Comp. Ex. 5 | 35.6 | 31.1 | 37 | 1.5 | 8.1 | 23.4 |

Referring to Table 1, it was confirmed that the super absorbent polymers of Examples manufactured through a micronization process under specific conditions according to the preparation method of the present disclosure had a lower fine particle content, and excellent absorption properties (particularly, absorption rate) compared to Comparative Examples.

Meanwhile, in the case of Comparative Example 1, it was confirmed that centrifuge retention capacity of the base resin was greatly reduced, and the generation of fine particles was significantly increased, because the micronization process was not performed under high shear conditions and a large amount of chemical foaming agent was used. Accordingly, the rewet properties were also significantly reduced due to the low centrifuge retention capacity and the high extractable contents of the final product.

In the case of Comparative Example 2, the polymer chain structure of the polymer was damaged due to an increase in shear force by excessively high rpm. In this case, it was confirmed that the improvement in absorption rate was insignificant, and the rewet of the final product was significantly decreased due to the increase in extractable contents by

the damaged polymer chain structure.

In Comparative Example 3, it was confirmed that sufficient bubbles were not formed inside the polymer due to the decrease in shear force by low rpm, and thus the absorption rate was decreased.

In the case of Comparative Examples 4 and 5, since the neutralization process was performed in the polymerization step before micronization, the polymer itself was too hard to easily perform the micronization process. As a result, absorption properties were lowered, and the generation of fine particles was significantly increased compared to Examples.

## Claims

**1.** A preparation method of a super absorbent polymer comprising the steps of:

performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
micronizing the polymer at a rotation speed of 500 rpm to 4,000 rpm (step 2);
neutralizing at least some of the acidic groups of the polymer (step 3);
drying the micronized and neutralized polymer to obtain dried super absorbent polymer particles (step 4); and
preparing super absorbent polymer particles by pulverizing the dried super absorbent polymer particles (step 5).

**2.** The preparation method of a super absorbent polymer of Claim 1,
wherein the step 1 is performed in a batch type reactor for 1 hour or more.

**3.** The preparation method of a super absorbent polymer of Claim 1,
wherein the step 2 is performed at a rotation speed of 1,500 rpm to 3,500 rpm.

**4.** The preparation method of a super absorbent polymer of Claim 1,
wherein the steps 2 and 3 are performed sequentially, alternately, or simultaneously.

**5.** The preparation method of a super absorbent polymer of Claim 1,

wherein the step 3 is performed by a high-shear pulverizing machine, and the high-shear pulverizing machine comprises
a body comprising a transfer space in which a polymer is transferred;
a screw part rotatably installed inside the transfer space to move the polymer;
a driving motor providing rotational driving force to the screw part;
a cutter part installed in the body to pulverize the polymer; and
a perforated plate having a plurality of holes and capable of discharging the polymer pulverized by the cutter part to the outside of the body.

**6.** The preparation method of a super absorbent polymer of Claim 5,
wherein a size of the holes formed in the perforated plate is 1 mm to 25 mm.

**7.** The preparation method of a super absorbent polymer of Claim 1,
wherein the step 4 is performed by a method of fixed-bed type drying, moving type drying, or a combination thereof.

**8.** The preparation method of a super absorbent polymer of Claim 7,
wherein the step 4 is performed by a method of fixed-bed type drying at 80 °C to 200 °C.

**9.** The preparation method of a super absorbent polymer of Claim 7,
wherein the step 4 is performed by a method of moving type drying at 100 °C to 300 °C.

**10.** The preparation method of a super absorbent polymer of Claim 1,
wherein a moisture content of the dried super absorbent polymer particles obtained by performing the step 4 is 1 wt% to 20 wt%.

**11.** The preparation method of a super absorbent polymer of Claim 1, further comprising an additive addition step of mixing any one of additional additives consisting of a polymerization initiator, a neutralizing agent, a surfactant, fine particles, a permeability improver, an anti-caking agent, and an antioxidant with the micronized and neutralized polymer.

**12.** The preparation method of a super absorbent polymer of Claim 11, wherein the additive addition step is performed simultaneously with step 2, simultaneously with step 3, after step 3, or in at least one of these steps.

**13.** The preparation method of a super absorbent polymer of Claim 1 or Claim 11, further comprising a step of forming a surface cross-linked layer on at least a part of a surface of the super absorbent polymer particles.

【FIG. 1】

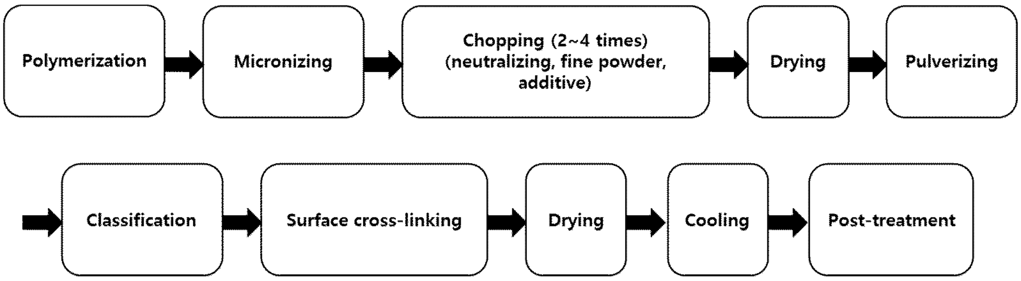
Polymerization
Micronizing
Chopping (2~4 times) (neutralizing, fine powder, additive)
Drying
Pulverizing
Classification
Surface cross-linking
Drying
Cooling
Post-treatment

【FIG. 2】

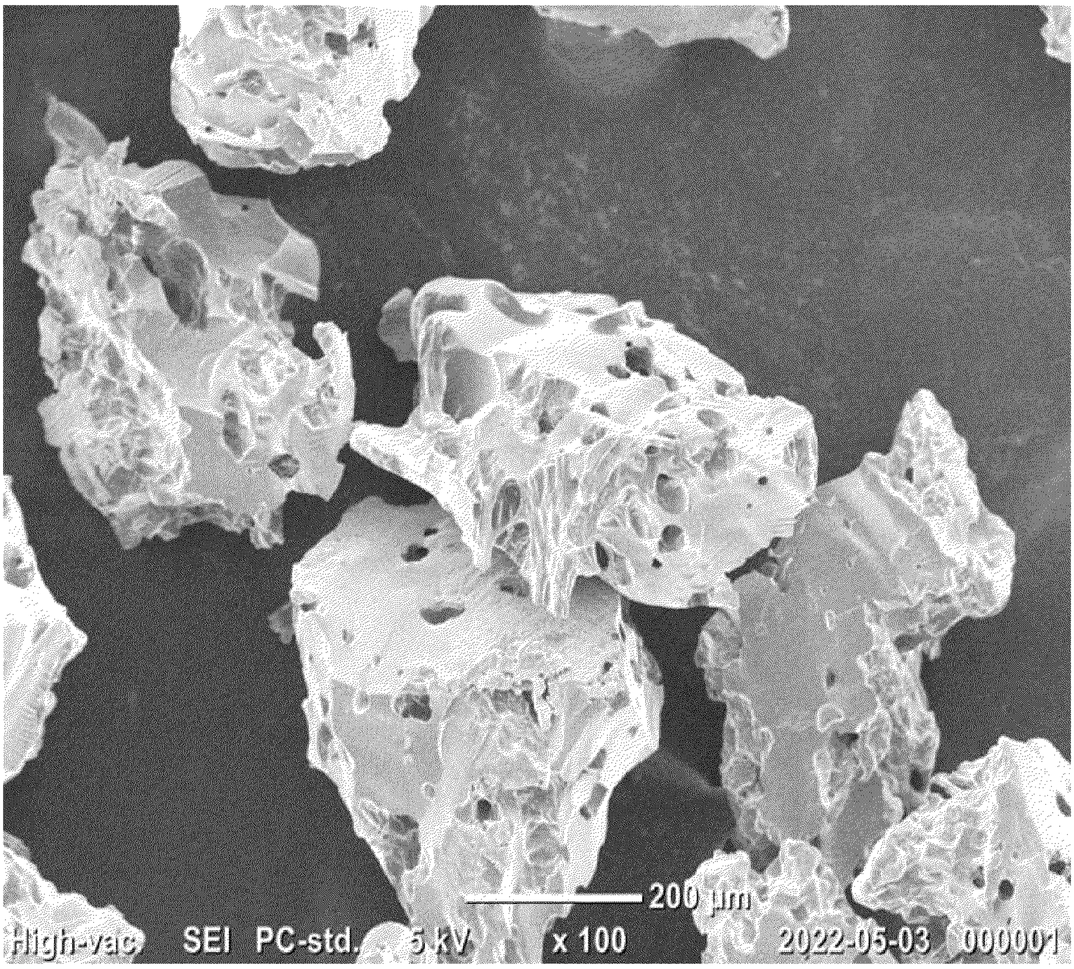
200 µm
High-vac. SEI PC-std. 5 kV x 100 2022-05-03 000001

## INTERNATIONAL SEARCH REPORT

International application No. **PCT/KR2023/020792**

**A. CLASSIFICATION OF SUBJECT MATTER**

**C08J 3/24**(2006.01)i; **C08J 3/12**(2006.01)i; **C08F 20/06**(2006.01)i; **C08J 3/075**(2006.01)i

According to International Patent Classification (IPC) or to both national classification and IPC

**B. FIELDS SEARCHED**

Minimum documentation searched (classification system followed by classification symbols)

C08J 3/24(2006.01); B01J 20/26(2006.01); B01J 20/30(2006.01); B29B 11/10(2006.01); C08F 12/06(2006.01); C08F 2/44(2006.01); C08F 20/04(2006.01); C08F 220/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent resin), 초미분쇄(ultra-fine grinding), 수용성 에틸렌계 불포화단량체(water-soluble ethylenically unsaturated monomer), 내부가교제(internal cross-linking agent), 표면 가교제(surface cross-linking agent)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0071658 A (LG CHEM, LTD.) 19 June 2020 (2020-06-19)<br>See claims 1-9; and paragraphs [0039]-[0089]. | 1-13 |
| A | US 2016-0332141 A1 (NIPPON SHOKUBAI CO., LTD.) 17 November 2016 (2016-11-17)<br>See entire document. | 1-13 |
| A | KR 10-1812895 B1 (LOTTE CHEMICAL CORPORATION) 28 December 2017 (2017-12-28)<br>See entire document. | 1-13 |
| A | KR 10-2020-0073358 A (LG CHEM, LTD.) 24 June 2020 (2020-06-24)<br>See entire document. | 1-13 |
| A | KR 10-2021-0038250 A (LG CHEM, LTD.) 07 April 2021 (2021-04-07)<br>See entire document. | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2024** | **25 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020792**

| Patent document cited in search report | Publication date (day/month/year) | Patent family member(s) | Publication date (day/month/year) |
|---|---|---|---|
| KR 10-2020-0071658 A | 19 June 2020 | None | |
| US 2016-0332141 A1 | 17 November 2016 | CN 102317329 A | 11 January 2012 |
| | | CN 102317329 B | 08 October 2014 |
| | | CN 102712712 A | 03 October 2012 |
| | | CN 102712712 B | 06 May 2015 |
| | | CN 102822209 A | 12 December 2012 |
| | | CN 102822209 B | 03 September 2014 |
| | | CN 104212105 A | 17 December 2014 |
| | | CN 104212105 B | 01 August 2017 |
| | | CN 104231144 A | 24 December 2014 |
| | | CN 104231144 B | 15 May 2018 |
| | | EP 2399944 A1 | 28 December 2011 |
| | | EP 2399944 B1 | 02 December 2015 |
| | | EP 2399944 B2 | 07 August 2019 |
| | | EP 2518092 A1 | 31 October 2012 |
| | | EP 2518092 B1 | 15 March 2017 |
| | | EP 2557095 A1 | 13 February 2013 |
| | | EP 2557095 B1 | 05 October 2016 |
| | | EP 2589613 A1 | 08 May 2013 |
| | | EP 2589613 B1 | 13 May 2015 |
| | | EP 3115382 A1 | 11 January 2017 |
| | | EP 3115382 B1 | 10 July 2019 |
| | | JP 2014-098172 A | 29 May 2014 |
| | | JP 2014-237846 A | 18 December 2014 |
| | | JP 2015-083693 A | 30 April 2015 |
| | | JP 2016-211009 A | 15 December 2016 |
| | | JP 5600670 B2 | 01 October 2014 |
| | | JP 5647625 B2 | 07 January 2015 |
| | | JP 5676572 B2 | 25 February 2015 |
| | | JP 5889349 B2 | 22 March 2016 |
| | | JP 6013414 B2 | 25 October 2016 |
| | | JP 6093751 B2 | 08 March 2017 |
| | | JP 6157853 B2 | 05 July 2017 |
| | | JP 6359600 B2 | 18 July 2018 |
| | | KR 10-1895624 B1 | 05 September 2018 |
| | | KR 10-1908142 B1 | 15 October 2018 |
| | | KR 10-1946227 B1 | 08 February 2019 |
| | | KR 10-2012-0132475 A | 05 December 2012 |
| | | KR 10-2013-0093477 A | 22 August 2013 |
| | | KR 10-2018-0112110 A | 11 October 2018 |
| | | SG 181879 A1 | 30 July 2012 |
| | | US 10434495 B2 | 08 October 2019 |
| | | US 2011-0313113 A1 | 22 December 2011 |
| | | US 2012-0258851 A1 | 11 October 2012 |
| | | US 2013-0026412 A1 | 31 January 2013 |
| | | US 2013-0101851 A1 | 25 April 2013 |
| | | US 2014-0296465 A1 | 02 October 2014 |
| | | US 2015-0259494 A1 | 17 September 2015 |
| | | US 8791210 B2 | 29 July 2014 |
| | | US 9074030 B2 | 07 July 2015 |

Form PCT/ISA/210 (patent family annex) (July 2022)

**INTERNATIONAL SEARCH REPORT**
**Information on patent family members**

International application No.
**PCT/KR2023/020792**

| Patent document cited in search report | Publication date (day/month/year) | Patent family member(s) | Publication date (day/month/year) |
|---|---|---|---|
| | | US 9243079 B2 | 26 January 2016 |
| | | US 9315640 B2 | 19 April 2016 |
| | | US 9334376 B2 | 10 May 2016 |
| | | US 9447203 B2 | 20 September 2016 |
| | | WO 2010-095427 A1 | 26 August 2010 |
| | | WO 2011-078298 A1 | 30 June 2011 |
| | | WO 2011-126079 A1 | 13 October 2011 |
| | | WO 2012-002455 A1 | 05 January 2012 |
| KR 10-1812895 B1 | 28 December 2017 | None | |
| KR 10-2020-0073358 A | 24 June 2020 | CN 111670210 A | 15 September 2020 |
| | | CN 111670210 B | 28 March 2023 |
| | | EP 3719059 A1 | 07 October 2020 |
| | | EP 3719059 A4 | 20 January 2021 |
| | | EP 3719059 B1 | 22 February 2023 |
| | | JP 2021-510396 A | 22 April 2021 |
| | | JP 7118494 B2 | 16 August 2022 |
| | | KR 10-2556373 B1 | 17 July 2023 |
| | | US 11498050 B2 | 15 November 2022 |
| | | US 2020-0368722 A1 | 26 November 2020 |
| | | WO 2020-122442 A1 | 18 June 2020 |
| KR 10-2021-0038250 A | 07 April 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220176831
- KR 1020220177310
- KR 1020230181009
- WO 1987003208 A


### Non-patent literature cited in the description


- **ODIAN**. Principle of Polymerization. Wiley, 1981, 203